# EUROPEAN PATENT SPECIFICATION

(11) **EP 4 086 920 B1**
(45) Date of publication and mention of the grant of the patent: **10.07.2024**
(21) Application number: 21172618.7
(22) Date of filing: 06.05.2021
(51) Int. Cl.: G21B 1/11, G21B 1/15

(54) **INDUCTIVELY DRIVEN PELLET ACCELERATOR AND INJECTOR**
INDUKTIV ANGETRIEBENER PELLETBESCHLEUNIGER UND INJEKTOR
ACCÉLÉRATEUR ET INJECTEUR DE PELLETS À ENTRAÎNEMENT INDUCTIF

(43) Date of publication of application: 09.11.2022
(73) Proprietor: SECRETARY, DEPARTMENT OF ATOMIC ENERGY, 400 001 Mumbai (Maharashtra) (IN)
(72) Inventor: PAHARI, Sambaran, 530044 Visakhapatnam (IN); DOSHI, Bharatkumar, 382007 Gandhinagar (IN); P.P., Rahulnath, 530012 Visakhapatnam (IN); MAURYA, Pradeep Kumar, 530012 Visakhapatnam (IN); SAVITA, Aditya Nandan, 530012 Visakhapatnam (IN); JHA, Saroj Kumar, 530012 Visakhapatnam (IN); SHIV, Neeraj, 530046 Visakhapatnam (IN); KOLLIPARA, Raghavendra, 521366 Andhra Pradesh (IN); HEMANI, Harsh, 530044 Visakhapatnam (IN); GHOSH, Joydeep, 380005 Ahmedabad (IN); CHATTOPADHYAY, Prabal Kumar, 382424 Ahmedabad (IN); CHATURVEDI, Shashank, 380058 Ahmedabad (IN)
(74) Representative: Cabinet Laurent & Charras

(56) References cited:
- CN-A- 111 964 524
- US-A1- 2015 302 940
- WANG MIN ET AL: "Trigger control research of electromagnetic coil launcher based on real-time velocity measurement", 2014 17TH INTERNATIONAL SYMPOSIUM ON ELECTROMAGNETIC LAUNCH TECHNOLOGY, IEEE, 7 July 2014 (2014-07-07), pages 1 - 5, XP032657474, DOI: 10.1109/EML.2014.6920614

## Description

### TECHNICAL FIELD OF THE INVENTION

The present invention relates to Pellet Accelerator and Injector devices, more particularly Inductively driven Pellet Accelerator and Injector device to be used for all applications wherever acceleration and/or impact of high velocity milli/micro/nano particles may be relevant, such as, but not limited to, for study of spacecraft protection against impact of space debris/interstellar dust, additive manufacturing, needleless drug delivery, impact bonding, study of impact induced erosion mechanisms, experimental fusion reactor vessels, to name a few.

### BACKGROUND OF THE INVENTION

Inductively driven Pellet Accelerator and Injector device is an innovative Electromagnetic Launcher that uses electromagnets configured to accelerate solid pellets of varying sizes and materials to a wide range of desired velocities. It can be used for all applications wherever acceleration and/or impact of high velocity milli/micro/nano particles may be relevant, such as, but not limited to, for study of spacecraft protection against impact of space debris/interstellar dust, additive manufacturing, needleless drug delivery, impact bonding, study of impact induced erosion mechanisms, to name a few. In addition, injection of micro-particles of relevant materials is crucial in experimental fusion reactor vessels where magnetically confined plasmas are being held with an objective to achieve nuclear fusion for energy production. In such Fusion Plasmas, injection of frozen gas pellets is known to serve various purposes namely, fueling of the plasmas, suppression of certain plasma activity and instabilities and triggering a stream of electrons (runaway electrons) often for scientific studies. Of these, the most crucial need is perhaps to mitigate catastrophic instabilities often found to disrupt the plasma. This can lead to a large amount of heat being leaked out of the plasma causing massive damage to the reactor vessel and its components. While such random disruptive events are unavoidable, in the event of such disruption and with detection of early signatures, injection of solid impurities can help to quench the plasma by absorbing and radiating away the heat load. If done fast enough the shutting down of plasma discharge can prevent any damage to the reactor vessel.

Well-established facilities that serve to accelerate micro-particles to hyper-velocities include vacuum free-fall tubes, Van de-Graff-Accelerators and Laser driven Particle Impact Test Facility (LIPIT) etc. Each of these cover a specific range of velocities and particle size [See Ref 1-5and Tablet]. On the other hand, micro-particle injectors used in Fusion reactors for quenching a burning plasma in case of a disruptive instability have predominantly relied on well-established pneumatic drives [See Ref 6-11 and Tablet], These injectors mostly inject Gas or Frozen-Gas (cryo) pellets, the latter often shattered before injection. In recent times pneumatically driven Solid Pellets have also been injected to achieve discharge shutdown, marking an important improvement over Massive Gas injection or Shattered pellet injection. With pneumatic drives being inherently slow, electromagnetic acceleration of solid pellets has also been proposed [ Table1]. This relies on the Lorentz forces experienced by current carrying conductors in a magnetic field. In one such configuration, an external energy source has been used to drive a primary current through two current carrying rails and a conducting capsule placed transverse to the path of movement across the rails. The conducting capsule, besides completing the primary current path through the rails, is configured to carry the pellets to be released into the Fusion reactor.

A summary of Patents related to Pellet injectors for Fusion Reactors (Fueling as well as Disruption Mitigation) are summarized below.

**Table 1: Pellet Injector Patents**

| **Title** | **Purpose** | **Patent No. & Details** |
|---|---|---|
| Methods and Apparatus for mitigating plasma disruption in fusion devices | Disruption Mitigation | US 20190198182 (US) |
| | | 27/06/2019 |
| | | Assignee: Paul Brownlee Parks, General Atomics |
| Pellet for shutting plasma | Disruption Mitigation | JPH11148989A (Japanese) |
| | | 02/06/1999 |
| | | Takuro Honda, Hitachi Ltd |
| Fuel pellet injector for thermonuclear installations | Fueling | SU1383450A1 (Russian) |
| Centrifuges fusion fuel pellet injector | Fueling | DE19962163B4 (Germany) |
| | | 25/12/1998 |
| | | Assignee: Igor VasilievitschViniar, Pelin Inc Mountreal |
| Microwave-powered pellet accelerator | Fueling | US 20090028282 |
| | | 29/01/2009 |
| | | Assignee: Paul Brownlee Parks, General Atomics |
| Electromagnetic Matter Injector and Capsule System | Disruption Mitigation | US20150302940 |
| | | 27/06/2019 |
| | | Assignee: Roger Raman |

**Drawbacks Connected with hitherto known Processes/Devices:** The various micro-pellet accelerators mentioned above cover a specific range of size and velocities [See Table 1]. Van de Graff accelerators can accelerate nanoparticles and can carry out acceleration of bulk particles but are limited to conductive materials. Vacuum free-fall tubes on the other hand enable single particle acceleration but at slow velocities. Laser facilities can be used to launch thin films as flyers. Relying on such laser ablation for acceleration, laser-induced particle impact test facility (LIPIT) can also launch micro-particles with high velocity. But these are known to create ablation related debris as well as melting and fragmentation.

As far as Fusion Plasmas applications are concerned, conventional injectors rely on pneumatic drives and may be useful where Gas injection (in the form of frozen gas pellets) is used for shutting down plasmas. However, this is inherently a slow process. Even if the gas flow velocity were to be increased (say, by increasing the gas pressure or by placing the gas source closer to the reactor vessel) the process of quenching the plasma through gaseous impurities is a complicated process. The thermal quench intended to shut down the burning plasma is preceded by a pre-thermal quench phase. Pushing in a gas too fast may end up causing insufficient gas accumulation in the pre-thermal quench phase, less than the amount required for radiation of heat flux during the thermal quench phase. In addition, in large fusion machines like ITER, the injected gas needs to overcome several energy barriers present at the edge of the plasmas and reaching the core is further aggravated since the volume of plasma is large. All these limitations provide motivation for alternate impurity injection technologies. The problems have been circumvented to a great extent by acceleration of Solid Pellets into the plasma. In these methods, the radiative material typically in the form of a shell is deposited directly in the required region where it is most effective. However, the conventional methods use light gases like pressurized H₂ or He to propel the pellets. The use of pressurized gas limits the pellet velocity to -300 m/s to 400 m/s. The slow thermal velocity of the heavier impurity gas molecules limits the time needed to travel the 4 to 6 m distances before it reaches the plasma edge. Also, the response times involved are slow due to involvement of mechanical valves. Such methods of acceleration may be unsuitable for shutting down the plasma discharge with large plasma volume requiring a short warning time scale of less than 10 milliseconds.

The shortcomings of various micro-particle accelerators as well as those specifically proposed and designed for Disruption Mitigation systems in Fusion Reactors are summarized below.

**TABLE 2: Limitations of Prior Art**

| **S. No.** | **DMS Pellet Injector system / Process** | **Drawback/limitation** |
|---|---|---|
| 1 | Pneumatic Driven Systems using Solid Pellet (Shell/Shattered) | These methods use light gases like pressurized H₂ or He to propel the pellets. |
| | | a) The pressurized gas limits the pellet velocity to -300 m/s to 400 m/s. |
| | | b) The response times involved are slow due to involvement of mechanical valves. |
| | | c) The slow thermal velocity of the heavier impurity gas molecules limits the time needed to travel the 4 to 6 m distances |
| | | d) All of the above makes it unsuitable for disruptions with a short warning time scale of less than 10 ms. |
| 2 | Pneumatic Driven Systems using Massive Gas Injection | In addition to the above limitations |
| | | a) to avoid edge deposition of radiative payload, injected gas need to first penetrate an energetic SOL; this is aggravated by intense edge conditions and large volume of ITER Plasma |
| | | b) requirement of a critical mass of impurities dictated by the pre-thermal quench physics makes it difficult to increase the plenum pressure or placing the gas injector closer to the plasma as it may end up shortening the Pre-TQ stage |
| 3 | Electromagnetic Driven Systems | a) May get hampered by or may itself interfere with the magnetic field(s) of Fusion Reactor |
| | | b) May be hampered by electrode erosion etc., as it involves moving electrical contacts. |

| **S. No.** | **Other Micro-particle accelerators /launchers** (for purposes other than DMS) | **Drawback/limitation** |
|---|---|---|
| 4 | Van de Graff accelerators | can carry out acceleration of bulk particles but are limited to conductive materials |
| 5 | Vacuum free-fall tubes | enable single particle acceleration but at slow velocities making them unsuitable for high velocity applications |
| 6 | Laser based acceleration | Launches only thin films as flyers |
| 7 | Laser driven Particle Impact Test Facility (LIPIT) | launch micro-particles with high velocity but are known to create ablation related debris as well as melting and fragmentation. |

As discussed above and summarized in Table-1 conventional pneumatic drivers are known to suffer from several shortcomings and alternate electromagnetic accelerators may help to circumvent them. However, the only other electromagnetic system proposed and patented in recent times (Table-1, S.No 3) uses a primary current through two current carrying rails to drive a capsule; the capsule itself, placed transverse across the rails, completes the primary current path while it is itself accelerated. Besides involving moving electrical contacts that may undergo electrode erosions etc, the ambient magnetic fields of the driver and the Fusion reactor may interfere with each other requiring clever configurations.

The design can be simplified if an alternate system can be thought of, wherein instead of primary currents, secondary currents induced in a non-contact way can be used to drive a capsule. Working of transformers, induction motors, generators and other popular electrical systems are based on such principles. Here in the primary coil is configured like an air-core solenoid and is driven by an energy source such that a time varying current flow through it. This generates a time varying magnetic field. This changing magnetic flux produces an electromotive force into an adjacent secondary coil, situated within the same magnetic field. A secondary current is induced in the secondary coil, in a contactless way. The electromagnetic (Lorentz) forces that result from the magnetic field of the primary coil and the secondary currents induced on the secondary coil propel the secondary coil. As the currents on the secondary coil are generated in a non-contact way (induced currents), inductively driven systems are thought to have several advantages over systems that uses primary currents to drive a coil. Such systems based on the principles of transformer action have been proposed earlier for accelerating large masses for space launch but have not yet been proposed or used for micro-pellet acceleration of any kind.

### SUMMARY OF THE INVENTION

The following disclosure presents a simplified summary of the invention in order to provide a basic understanding of some aspects of the invention. This summary is not an extensive overview of the present invention. It is not intended to identify the key/critical elements of the invention or to delineate the scope of the invention. Its sole purpose is to present some concept of the invention in a simplified form as a prelude to a more detailed description of the invention presented later.

The primary object of present invention is to overcome the drawbacks related to pellet acceleration and injection of prior art.

Another object of present invention is to provide a vacuum compatible electromagnetic accelerator using electromagnets to generate forces through induced currents in a contactless way -- to achieve solid micro-pellet acceleration.

The invention is primarily aimed, though not limited, to inject or_release (following acceleration to a desired velocity) a dispersive load of impurities in the form of solid material of various sizes, shapes and materials into magnetically confined plasma at the core of a Fusion Reactor (Tokamak).

Yet another object of present invention is to use a dispersive load of solid impurities to shut down the plasma discharge on rapid time scales by absorbing and radiating away the thermal energy in it. This is essential when there is an onset of a plasma instability that can disrupt the plasma and eventually damage the reactor.

The object of present invention is to provide an alternate to conventional slow pneumatic methods of injection of either Gas/frozen gas or solid impurities carried out for the same purpose, that are plagued by several limitations, namely, slow response time and inability to reach the core. An electromagnetic pellet injector will overcome these limitations easily as higher velocities can be achieved and such a system can meet short warning timescales -both important on large sized-fusion grade reactors.

Yet another object of present invention is to provide alternate to other electromagnetic acceleration techniques proposed elsewhere, whereby:(a) instead of relying on primary currents, secondary currents required for electromagnetic forces are generated (induced) in a contactless way, thereby avoiding moving electrical contacts that may lead to arcing, electrode erosions etc and (b) the system neither affects nor is affected by ambient magnetic fields typically present in Fusion Reactors.

The further object of the invention is to fulfil wider objective to accelerate pellets --single or individual particles, of varying materials of various shapes and sizes, from nanoparticles (few nano-meters) to macroparticles (few mm) with no associated debris. The same device can be used to accelerate particles to different velocities desired by the user and therefore may cater to a wide range of applications, as mentioned in Table 1, overcoming the limitations of systems mentioned therein.

One aspect of present invention is a Pellet Accelerator and Injector device to accelerate a cartridge, loaded with pellets of solid material, comprising a core system and a peripheral system;
wherein the core system comprises a vacuum sealed enclosure, one or more linearly arranged, current carrying hollow bore Electromagnets that drive the Cartridge, an insulating Barrel through which the cartridge moves, the Cartridge that carries the pellets within itself and offloads them through impact-induced separation process at the muzzle of the barrel and a Stopper at the muzzle of the barrel, that stops the cartridge and detaches it from the pellets and all these components are mounted on support structures; and
wherein the peripheral system comprises power supplies for the electromagnets to apply electrical voltage and drive current through, switches that connect the electromagnet to the Power supplies, a velocity measurement system, and a Master Control hardware that acts on the feedback from velocity measurement system and synchronizes the coil switching; characterized in that
the electromagnet, namely a coil carrying a time-varying current, is used to generate magnetic fields inside the coil directing along the axis of the coil and along the radius and on closing the switch in a circuit formed by the coil and the power supply, the time varying current flowing through the electromagnet creates the time varying axial magnetic field that induces an electric potential on the cartridge placed within it, in a contactless way resulting a secondary current to flow circumferentially on skin of the conducting cartridge and the secondary current density on the cartridge and the radial magnetic field of the electromagnet together generate an electromagnetic force, F_{z}, that accelerates the cartridge loaded with pellets within it.

The Inductively driven Pellet Accelerator and Injector device is adapted to operate at conditions ranging from atmospheric pressure to high/ultra-high vacuum. The solid pellets loaded into a metal cartridge are accelerated under the action of electromagnetic forces that are induced on the cartridge in a contactless way. The cartridge releases the pellets through a well optimized separation mechanism. The mean velocity of the micro-pellets is close to that of the muzzle velocity of the Cartridge with a narrow distribution of speed. The quantity, size and material of pellets as well as the velocity can be varied over a range. The design of the system is modular in which the velocity can be increased by increasing the number of modules.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE ACCOMPANYING DRAWINGS

The above and other aspects, features and advantages of the embodiments of the present disclosure will be more apparent in the following description taken in conjunction with the accompanying drawings, in which:
- Figure 1: illustrates the working principle of an Inductively driven Pellet Accelerator and Injector device as disclosed in one of the embodiments of present invention.
- Figure 2: illustrates the design of the multi-module system in that more than one electromagnet (100) is present as disclosed in one of the embodiments of present invention.
- Figure 3: illustrates a block diagram of an example Inductively driven Pellet Accelerator and Injector device as disclosed in one of the embodiments of present invention.
- Figure 4: illustrates the Assembly of the core System inside a vacuum enclosure as disclosed in one of the embodiments of present invention.
- Figure 5: illustrates the details of Electromagnet as disclosed in one of the embodiments of present invention.
- Figure 6: illustrates the details of the cartridge (103) as disclosed in one of the embodiments of present invention.
- Figure 7: illustrates the design of the stopper as disclosed in one of the embodiments of present invention.
- Figure 8: illustrates the details of the velocity measurement principle as disclosed in one of the embodiments of present invention.
- Figure 9: illustrates the synchronization of the switching of electromagnets with movement of the cartridge (103) in a multi-modular system using a Master Control Hardware as disclosed in one of the embodiments of present invention.
- Figure 10: illustrates the front port (404) of the enclosure (401) connected to a vacuum isolator (307) (such as, a vacuum valve) and an Electrical Isolator (308) as disclosed in one of the embodiments of present invention.
- Figure 11: illustrates Magazine for Cartridge Loading and Assembly for Cartridge removal as disclosed in one of the embodiments of present invention.
- Figure 12: illustrates combination of design parameters, namely, cartridge-face thickness, stub thickness and stopper diameter, that lead to successful rupture (diameter of opening-5 mm, time- 50-60 µs). While design 1, 2 and 3 are seen to be successful, other designs (such as Design 5 and 6) are not considered successful as they do not lead to sufficient opening in required time as disclosed in one of the embodiments of present invention.
- Figure 13: illustrates the experimental parameters required for achieving 200 m/s of cartridge speed, namely (a) Discharging voltage of the capacitor (b) Current flowing through the Electromagnet (c) Signal interruption on Photo-sensor due to movement of Cartridge and (d) Velocity distribution of Pellets as disclosed in one of the embodiments of present invention.

Persons skilled in the art will appreciate that elements in the figures are illustrated for simplicity and clarity and may not have been drawn to scale. For example, the dimensions of some of the elements in the figure may be exaggerated relative to other elements to help to improve understanding of various exemplary embodiments of the present disclosure. Throughout the drawings, it should be noted that like reference numbers are used to depict the same or similar elements, features, and structures.

### DETAILED DESCRIPTION OF THE PRESENT INVENTION

The following description with reference to the accompanying drawings is provided to assist in a comprehensive understanding of various embodiments of the present disclosure as defined by the claims. It includes various specific details to assist in that understanding, but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

All terms (including technical and scientific terms) used herein have the same meaning as commonly understood by one of ordinary skill in the art to which various embodiments belong. Further, the meaning of terms or words used in the specification and the claims should not be limited to the literal or commonly employed sense but should be construed in accordance with the present disclosure

The terminology used herein is for the purpose of describing particular various embodiments only and is not intended to be limiting of various embodiments. As used herein, the singular forms "a," "an" and "the" are intended to include the plural forms as well, unless the context clearly indicates otherwise. It will be further understood that the terms "comprises" and/or "comprising" used herein specify the presence of stated features, integers, steps, operations, members, components, and/or groups thereof, but do not preclude the presence or addition of one or more other features, integers, steps, operations, members, components, and/or groups thereof.

The present disclosure will now be described more fully with reference to the accompanying drawings, in which various embodiments of the present disclosure are shown. The present disclosure may, however, be embodied in many different forms and should not be construed as being limited to the various embodiments set forth herein, rather, these various embodiments are provided so that this disclosure will be thorough and complete, and will fully convey the present disclosure. Furthermore, a detailed description of other parts will not be provided not to make the present disclosure unclear. Like reference numerals in the drawings refer to like elements throughout.

The present invention, namely, Inductively-driven Pellet Accelerator and Injector device is an Electromagnetic Driver comprising of (a) a primary coil, (b) a secondary coil, in the form of a cartridge, that is accelerated over a travel length, (c) energy banks and associated charging power supplies that drive the primary coils and (d) high current closing switches that couple the energy banks to primary coils of the driver.

The configuration of the Electromagnetic Driver as an *inductively driven Pellet Accelerator and Injector device* has the following novel features:
1) Uses one or more linearly placed modules comprising of primary coils configured as hollow- bore electromagnets and powered by energy banks that accelerates a conducting capsule through secondary currents induced on it (in a non-contact way)
2) Comprises of a master control circuit hardware that actively synchronizes the activation of each module (operating the switches that couples the modules with energy banks) with the movement of cartridge inside the electromagnets
3) Comprises of a velocity measurement system that locates the cartridge, measures the velocity of the moving cartridge and estimates the time of arrival in each module thereby synchronizing the activation of each module with the movement of the capsule.
4) Comprises of a Capsule configured as a Cartridge of appropriate design and material that gives it the ability to carry particles of all sizes (nano-powders to millimetres), shapes and materials
5) The capsule configured as a Cartridge undergoing an optimized impact-induced separation process releasing the pellets on time scales such that mean velocity of pellet is close to the cartridge velocity
6) Wherein the successful separation of the cartridge and the pellets (payload) depends on a combination of design and material of the cartridge, the design and material of stopper, size of its central hole and an impact force that ensures separation.
7) An ability to inject a measurable amount in terms of Volume/Weight (few µg to few gms) of millimeter/micrometer/nanometer size particles
8) An ability to eject pellets as a collimated jet or having an aerial spread.
9) A magazine of cartridges configured to allow changing of Cartridges pre-loaded with pellets, as also a mechanism for removal of the spent cartridge from the muzzle without de-assembly.
10) A Core System (comprising of electromagnets, barrel, mechanical supports and connecting leads) made out of materials that are vacuum compatible and bakeable (without affecting their performance adversely) and/or have undergone processes that result in low outgassing rates and reduced gas load giving the system its ability to be maintained under vacuum (as well as at atmospheric pressure).
11) Configuration of an electro-polished housing for enclosing the core system, complete with diagnostic ports, pumping ports and viewing ports with vacuum sealing and electrical isolation, in a manner that ensures
   a. interfacing with peripheral systems (like high voltage power sources and velocity diagnostics) that sits outside vacuum,
   b. electrical isolation with attached target systems and its sub-systems
   c. coupling with target system, say, a reactor vessel (Tokamak), under vacuum
   d. vacuum isolation so that the system can be isolated from target system and independently vented
   e. placement and retrieval of cartridges without breaking vacuum.
12) A modular configuration where the number of modules (electromagnets) can be added to increase the maximum range of velocity of the pellets. The velocity can be varied within the range, as desired, through a set of simple interactive menu with a set of coarse and fine controls, viz., (i) choosing to operate a few selected electromagnets and (ii) regulating the voltages of various stages can provide a coarse control over the velocities (iii) adjusting the switching synchronization of each module (that is, the activation instant of each electromagnet with respect to the position of the cartridge inside it) can be used to achieve a fine control of the velocities.

The Inductively driven Pellet Accelerator and Injector device is a modular electromagnetic accelerator configured to accelerate a cartridge, loaded with pellets of solid material. Each module uses an electromagnet powered by an energy bank. The acceleration results due to time-varying magnetic fields produced and secondary currents induced on the cartridge in a non-contact way by the electromagnets. The cartridge off-loads the pellets into a target system or onto a substrate while itself getting discarded.

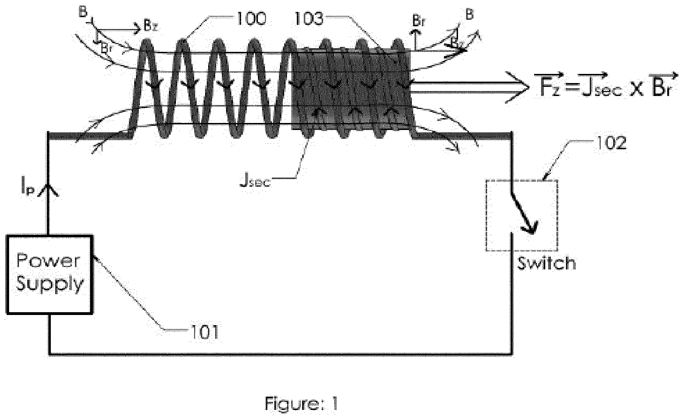

**Working Principle (Single Module):** Fig. 1 illustrates the working principle of an Inductively driven Pellet Accelerator and Injector device. An electromagnet, namely a coil (100) carrying a time-varying current (Iₚ),is used to generate magnetic fields inside the coil. These fields are directed along the axis of the coil (B_{z}) and along the radius (Bᵣ), the latter predominantly present at the edges of the coils. A power supply (101) is used to drive the current, Iₚ. As the switch (102) in the circuit is closed, a time varying Iₚ flowing through the electromagnet creates a time varying axial magnetic field (B_{z}) that induces an electric potential on a cartridge (103) placed within it, in a contactless way (Faraday's law of Electromagnetic Induction). The induced electric potential causes a current (I_{sec}) to flow circumferentially on skin of the conducting cartridge. The secondary current density (J_{sec})on the cartridge and the radial magnetic field (Bᵣ) of the electromagnet together generate an electromagnetic force, F_{z}, (Lorentz Force) along the z-axis that accelerates the cartridge (loaded with pellets within it). Since the radial magnetic field is directed oppositely at the right and left edge of the coil, the forces are equal but in opposite directions at the two edges. To solve this problem, the cartridge is placed off-center, optimally in one half of the electromagnet, in the preferred direction of acceleration so that forces are predominantly experienced in that direction.

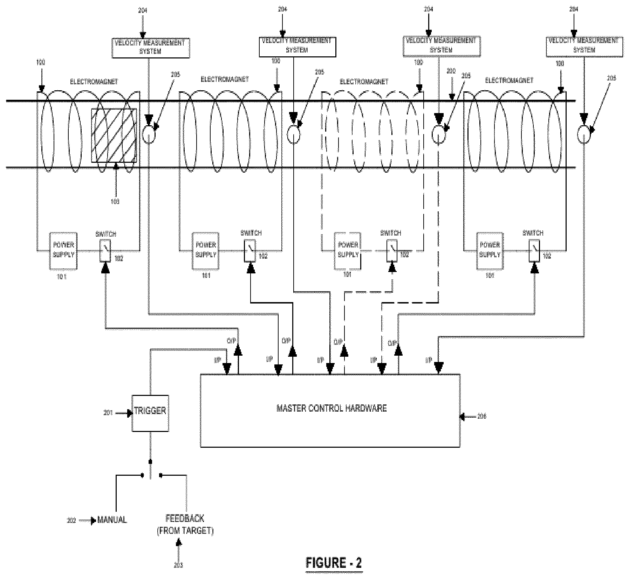

**Working of a Multi-Module:** The design of our system is modular (Fig.2) in that more than one electromagnet (100), each energized by a separate power supply (101),can be placed linearly to incrementally accelerate the cartridge to higher velocities. In such an embodiment each electromagnet is sequentially energized as the cartridge (103) passes through it. The cartridge travels in a non-conducting barrel (200) that extends through the bore of the electromagnets. The number of modules can be increased to increase the final velocity. Such an embodiment therefore allows the velocity to be increased without stressing a single electromagnet. The activation of first electromagnet is through a Trigger (201), generated manually (202) or on obtaining a feedback signal (203) from any associated target system. The activation of each subsequent electromagnet takes place with the arrival of cartridge within the respective electromagnet. To implement this, velocity measurement system (204) that measures the velocity of cartridge at discrete locations (205) at the end of each module and estimates its time of arrival at the next module. A programmable Master Control hardware (206) is used to process this real-time and time synchronize the closing of switch (102) connecting each electromagnet (100) to its power supply (101).

The cartridge (103) is configured to carry and accelerate the pellets within it to its final velocity. It is further configured to off-load the pellets at the end of the final accelerating stage through a well-optimised separation mechanism. The spent cartridge is left behind and can be removed from the muzzle before re-loading the next cartridge, (pre-filled with pellets).

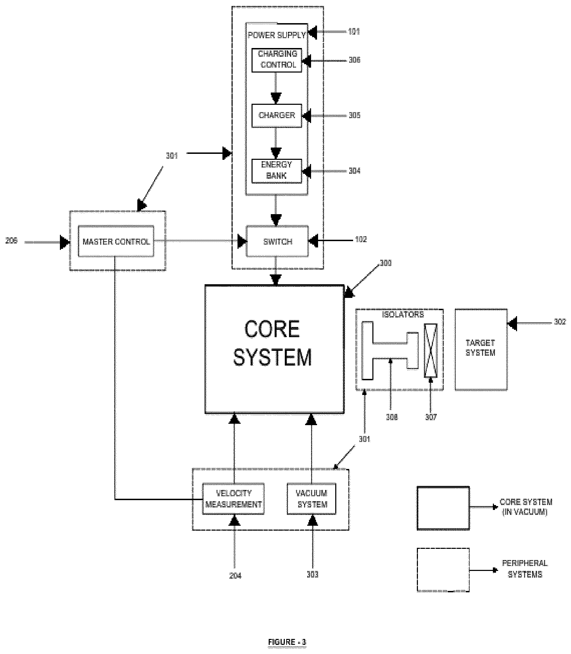

Fig. 3 shows a block diagram of an example Inductively driven Pellet Accelerator and Injector device. The example system can be divided into two parts: **Core System (300),** (all components that may be housed in-vacuum) and **Peripheral System(s) (301)** (all components placed outside vacuum). The Core System is connected to a **Target System (302).** Such a Target system can be any embodiment, where such pellets have to be impacted or injected, such as a Substrate or a Fusion Reactor Vessel.

**(I) Core System (300):** The Core System is housed in an enclosure. In one of the embodiments, the core system can be maintained under vacuum and therefore has all components made of vacuum compatible materials that have low outgassing rate and are bakeable to 100 °C (in order to remove water vapor). The enclosure can be vacuum sealed and pumped down using a vacuum pump.

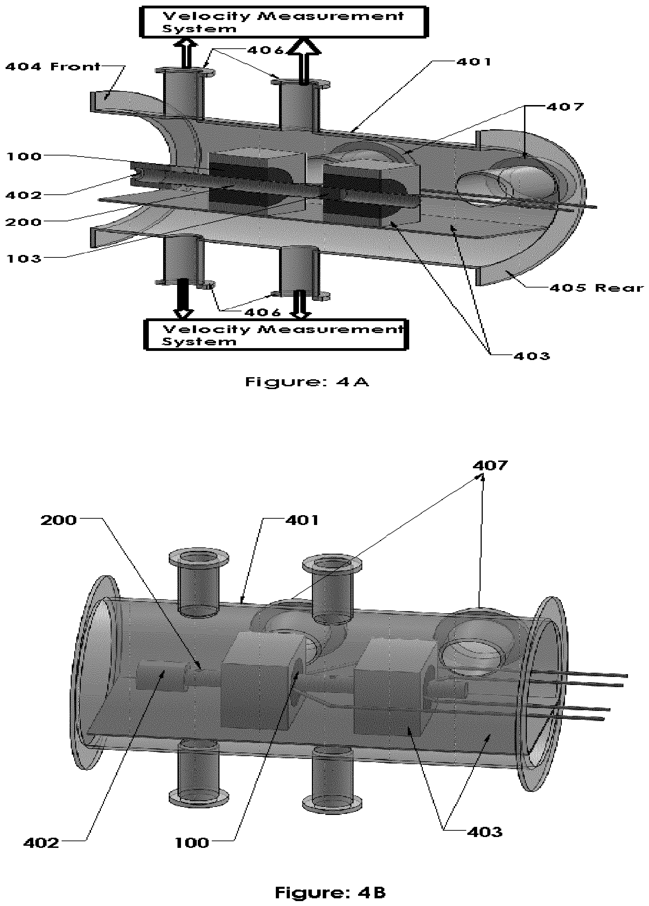

The Assembly of the core System is shown in Fig 4(a) and 4(b). It comprises of a vacuum sealed enclosure (401), Electromagnets (100) that drive the Cartridge, Barrel (200) through which the cartridge moves, Cartridge (103) that carries the pellets and a Stopper (402) that stops the cartridge and detaches it from the pellets. All these components are mounted on support structures (403).

**Enclosure (401):** The core system, consisting of electromagnets (100), barrel (200), stopper (402) and support structures (403) is placed inside an enclosure. In one of the embodiments, the enclosure is vacuum-sealed, made of material that is bakeable, having low outgassing rate, electropolished (internally) and can be pumped down to any measurable vacuum using a vacuum pump. The chamber has ports on the front (404), rear (405) and radially which are vacuum sealed with flanges. The flange on the rear end has all the electrical feedthroughs. The entire core assembly with all its electrical connections can be retracted out of the enclosure through the rear port (405). The rear flange also has a port aligned with the barrel that can be used to place/remove the cartridge. There are two pairs of radial viewing ports (406) with flanges made of optically transparent material, with each port of a pair placed diametrically opposite to the other. These are used for velocity measurements. There are two ports (407) of appropriate conductance that can be connected to vacuum systems.

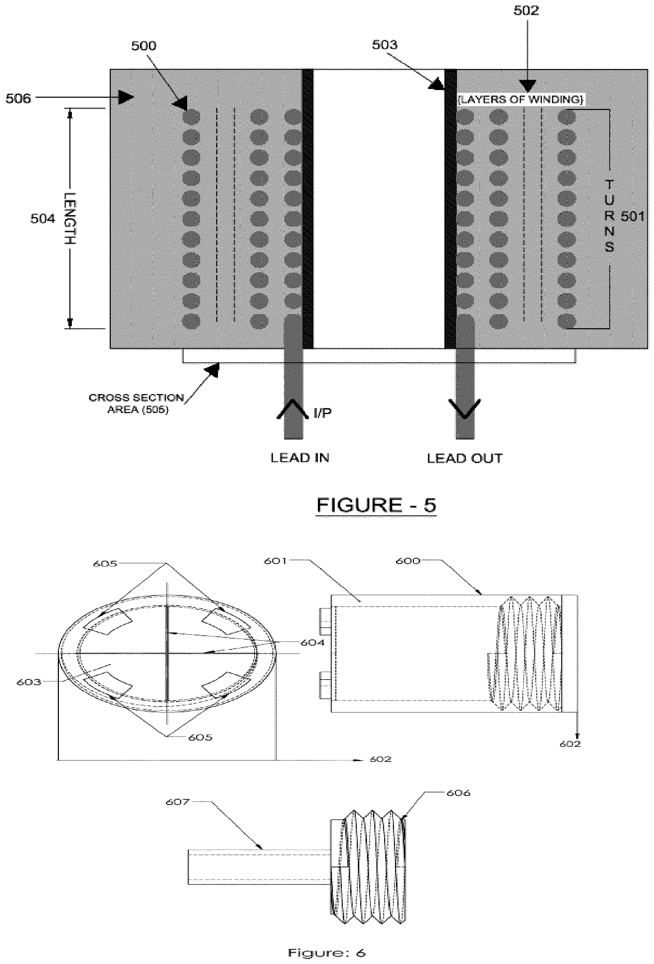

**Electromagnets (100):** At the core of the system are 1 (or more) pulsed electromagnets. The details are shown in Fig 5. Electromagnets are coils made of a conducting element (500), such as, but not limited to copper, copper-beryllium etc, having certain number of turns (501) wound in layers (502) over an insulating bobbin (503). Pulsed electromagnets will carry a time-varying (pulsed or alternating) primary current generating a transient magnetic field. Since the coils are designed to carry time-varying current, the geometry (length of the coil (504), number of turns (501) and area of cross section (505)) of the coils suitably configured and optimized to allow the primary current in the coil to ramp up to its peak value in a time period consistent with the movement of the mass (of cartridge) that is being accelerated. To state otherwise, the primary current, Iₚ, in the coil is to reach its maximum value around the time the rate of change of mutual interaction between the coil and cartridge is maximum too. This maximizes the force on the cartridge (103). In an embodiment where more than 1 electromagnet is present; each may be configured separately to allow for different ramp up time. A gap between electromagnets is maintained to avoid interference of fields of adjacent coils. In some examples, the coils maybe required to be strengthened and reinforced with fiber composites (506) (such as, but not limited to, Kevlar/Glass-fibre & epoxy) to withstand the magnetic (hoop) forces generated due to such currents.

**Barrel (200):** In one of the embodiments, all the electromagnets are wound over single insulating former that also acts as a continuous barrel (200) to allow seamless movement of cartridge. The former/barrel is made up of a vacuum compatible polymer material (such as, but not limited to Glass Fibre, Delrin, Teflon, PEEK etc). The bore diameter of the barrel is as close to the diameter of the Cartridge (103) to be accelerated (tolerance of -0.1 mm) to allow maximum energy transfer between the magnetic field of the coil and the cartridge. The barrel has pairs of holes (205) along it, with each hole of a pair placed across the diameter in gaps between the coils. The holes allow signals from a transmitter (such as optical beams from a light source, etc) to pass transverse to the path of the cartridge to track its movement.

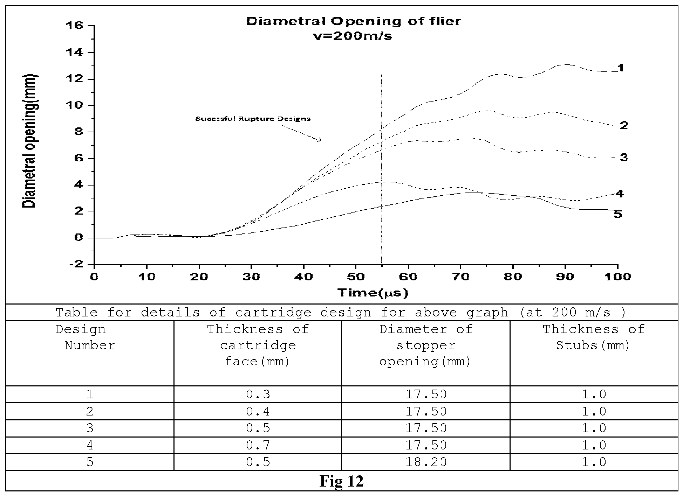

**Cartridge (103):** The cartridge (103), details of which are shown in Fig. 6, is a cylindrical shell (600) made of any light-weight, either a conducting material(601) (such as, but not limited to, Non-tempered Al-6061) or a non-conducting material with a conducting skin. The diameter (602) of the cartridge is approximately equal to the bore of barrel. The conductor or conducting skin should be of sufficient thickness to allow the induced current to flow through it (the skin thickness being dependent on the square root of resistivity of the material and oscillating time-period of the current). The cartridge (103) is configured to flair open upon impact with the Stopper (402). In one of the embodiments, the front face (603) of the cartridge is flat, thin (typically <1 mm) and have two cross-slits (604)(perpendicular to each other) with four stubs (605). The rear end is closed with a threaded plug (606). The plug has a hollow central axial tube (607) of few mm diameter (depending on the desired volume of pellets to be carried) and length approx. that of the cartridge; the tube is filled with desired pellets. The cartridge (103) upon impact onto the stopper (402) bursts open along the cross-slits (604). The front face (603) flares open allowing the pellets to escape. In one of the embodiments, the cartridge design has been optimized to rupture at 200 m/s. Fig 12. and table included therein shows design parameters, namely, cartridge-face thickness, stub thickness and stopper diameter, that lead to successful rupture (diameter of opening-5 mm, time- 50-60 µs). While design 1, 2 and 3 are seen to be successful, other designs (such as Design 5 and 6) do not lead to sufficient opening in required time.

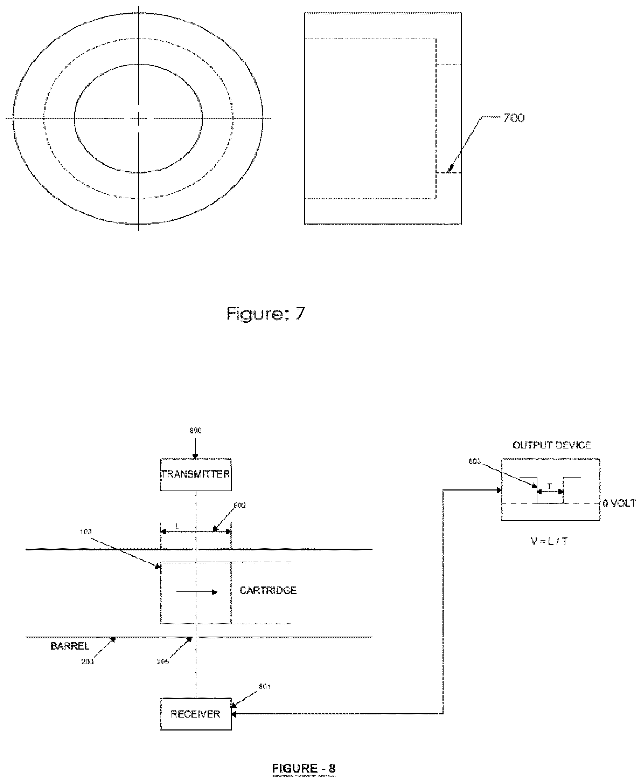

**Stopper (402):** The muzzle of the barrel has a 'stopper' (402) made of high strength material, such as, but not limited to hardened Steel, Inconol Alloys and the like shown in Fig. 7. The central hole (700) of the 'stopper' has a diameter less than the outer diameter of the cartridge (103). The function of the stopper (402) is to stop the cartridge (103) at the end of the acceleration; the impact with the stopper causes the cartridge to open at the front to off-load the pellets loaded within the cartridge. The impact force generated depends on the impact velocity of the cartridge as well as the cartridge and stopper material. For the successful opening of the cartridge (103), the impact force generated should be consistent with the design of the cartridge (103) (that is, the thickness of the front face (603)) and the design of the stopper (402) (including the diameter of stopper central hole).

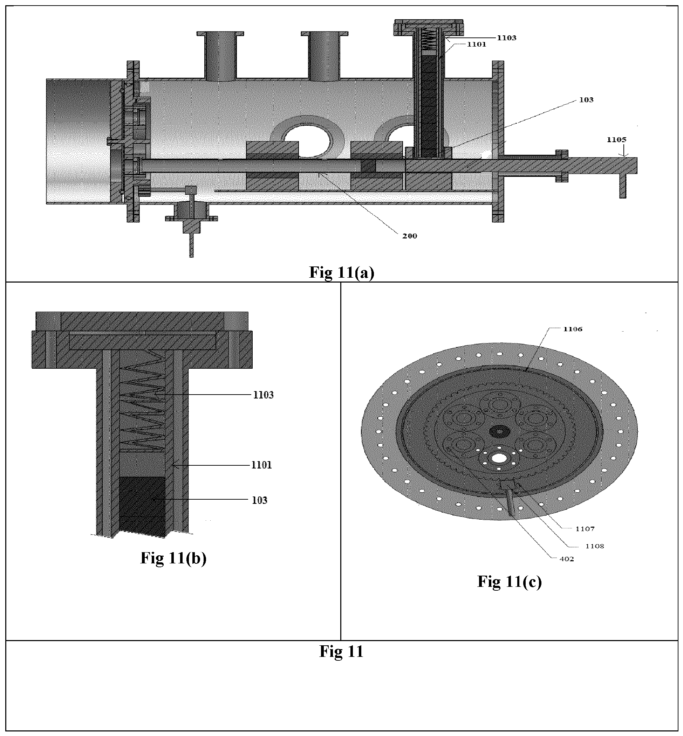

**Magazine for Cartridge Loading (****Fig. 11(a)**, (b)): A magazine has been separately designed for Loading of Cartridges [103] without opening the Core system or interrupting the vacuum. In one of the embodiments, it consists of a tube [1101] that can be separately spring-loaded [1102] with cartridges, vacuum sealed and introduced through a side port [1103] (perpendicular to the accelerating barrel (200)). The other end of the tube is aligned with the rear end of the barrel [200]. As a cartridge descends into the barrel it is pushed axially and placed in its position inside the coil through a linear-motion-feedthrough (lmf) [1105] aligned axially with the barrel. To load another cartridge, the lmf is retracted allowing the next cartridge to descend into the barrel, before being pushed into its position.

**Assembly for Cartridge removal (****Fig 11(a)**, (c)): In one of the embodiments a rotary disc [1106] with six stoppers [402] are arranged wherein each stopper is aligned with the muzzle of the barrel [200]. With each shot, the spent cartridge gets lodged into the stopper [402]. The rotary disc is then rotated before the next shot to align the next stopper with the muzzle. The rotation is enabled by a gear mechanism [1107] and stepper motor [1108] and operated through an electronic control circuit. In present embodiment upto 6 spent-cartridges can be accommodated before opening the system for removal of spent-cartridges.

**Support Structure (403):** The entire assembly of the electromagnet (100) and barrel (200) is mounted on a support structure (403) inside the vacuum enclosure (401) and is made of vacuum compatible bakeable material.

**(II) Peripheral System (301):** This comprises of all the power supplies (101) that energizes (applies electrical voltage and drives current through) the electromagnets, switches (102) that connect the electromagnet to the Power supplies, velocity measurement systems (204), and a Master Control hardware (206) that acts on the feedback from velocity measurement system and activates the switches. It may also be connected to a Vacuum System (303) (including vacuum pumps, valves and measurement systems) that, if required, maintains the core system under vacuum. All peripheral systems are located outside the enclosure (401) that houses the core system (300) and are connected to the core system through vacuum compatible interfaces/feedthroughs.

### Power Supply (101):

**Energy Bank (304):** An electromagnet (100) is powered by an energy bank (304) that can drive a time-varying current, such as, but not limited to, energy storage capacitor banks, battery bank, homopolar generator, etc. If more than one electromagnet (100) is present, each is powered through separate energy bank (304). The specifications of the energy bank are decided in conjunction with the parameters of the driver coil(s) (that form the electromagnet (100)) and are based on the requirements of acceleration namely, the mass of the pellet-filled cartridge (103) to be accelerated, the speed of the cartridge inside the electromagnet and the final output velocity desired. In one embodiment where the source is a capacitor bank (one or more capacitors connected in series and/or parallel), parameters that specify the bank are the electric voltages to which the capacitor bank is charged and total capacitance of the capacitor bank. In such cases, where more than one electromagnet is used to accelerate, the energy bank for each electromagnet (100) may be configured separately as the velocity of cartridge incrementally increases as it arrives within each. The lead cables from the capacitors to the electromagnets and their arrangements are configured such that they do not unduly affect the rise time of the current due to their inductance.

**Charger (305) for Energy Bank:** The energy banks (304) are charged to desired voltages using charging power supplies such as, but not limited to, rectified AC sources, Constant Current sources etc. In an embodiment where multiple energy banks (304) are used, a charging control (306) circuitry can be configured to charge multiple banks, each connected to a different electromagnet, to different electric voltages. A control hardware programmed with instructions can set the charging voltages for each energy bank, based on final desired output velocity.

**Switch (102):** Each energy bank (304) is coupled to its respective electromagnet (100) via a high voltage/ high current switch (102) that is normally open and prevents the energy source from discharging and driving the current through the electromagnet (100), unless desired. The switching instant is synchronized with the movement of the cartridge (103) with the help of Master Control Hardware (206).

**Velocity Measurement System (204):** The position and velocity of the cartridge (103) as it travels down the barrel (200) length is ascertained by a velocity measurement system (204). The details of the velocity measurement system are shown in Fig. 8. This consists of a transmitter (800) and a receiver (801) placed across the path of the cartridge at discrete locations. In one of the embodiments, a collimated light beam source (lasers) paired with a fibre-coupled fast optical sensor is placed across the barrel on opposite sides, transverse to the direction of movement of the cartridge (103)(i.e., transverse to the length of the barrel(200)).The transmitter-receiver pair is placed in the gaps between the coils; a pair of holes (205) on the barrel (200) allow the transmitter (800)signal on one side, to be incident on the receiver (801), placed on the opposite side, giving a measurable voltage at the output of the sensor. The Cartridge (103), as it travels through the barrel (200), intercepts the transmitter (800) signal in which case, due to the shadow of the cartridge, the output voltage of the receiver (801) goes to zero. The length of the cartridge (L (802)) upon the duration of interruption (T (803)) gives the velocity (V) of the cartridge, averaged over the duration of interruption. This process of "time-of-flight", real-time measurement of cartridge velocity is repeated after every module. Similar measurement at the end of final stage gives the final velocity of the cartridge. In one of the embodiments where the core system (300) is enclosed in a vacuum sealed enclosure (401), the receiver-transmitter arrangement is arranged outside the enclosure (401), as described in Fig 4.

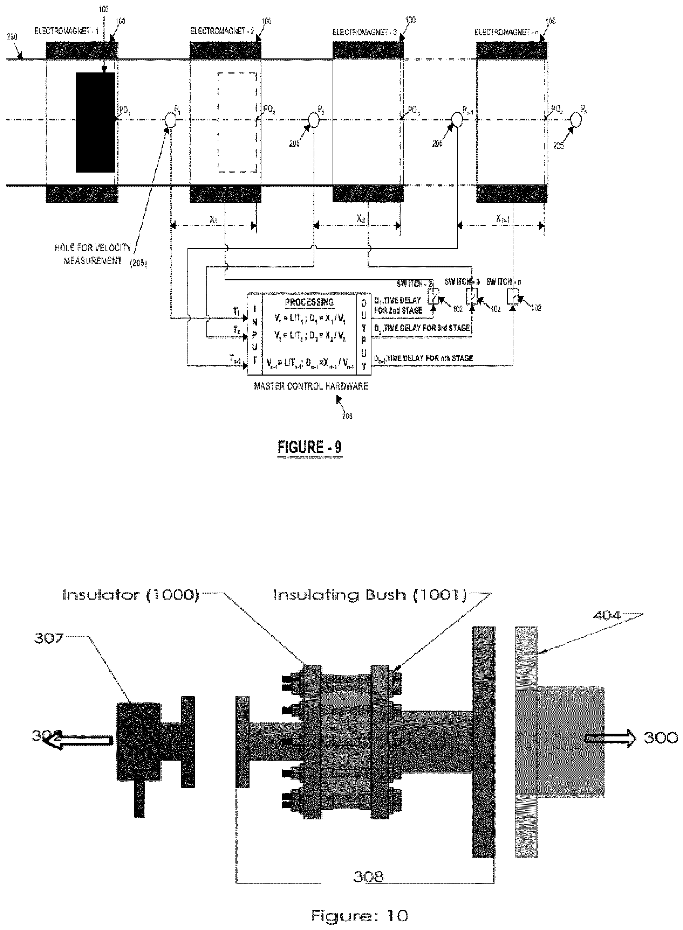

**Master Control Hardware (206):** Master Control Hardware (206) is used for synchronized activation of Electromagnets (100). In those embodiments where the accelerator is driven by more than one electromagnet (multi-module accelerator) the pulsed energy banks (304) are switched sequentially to drive current through each of the electromagnets (100) as described in Fig. 2.The switching is synchronized with movement of the cartridge (103) as illustrated in Fig. 9. Each switch (102) is activated as the cartridge (103) reaches an optimal position inside the respective electromagnets (100). The optimal position, POₙ, within each electromagnet (n being the nth electromagnet) is known *a priori* from calculations (computer simulations) carried out for the system. The cartridge is positioned at an optimal position PO₁, in the first electromagnet (100). The time, D₁, required to reach the optimum position inside subsequent electromagnet (100) is estimated from the velocity, V₁, of the cartridge measured real-time between the two electromagnets and the distance, X₁, between the point of measurement (P₁) and the known optimum position, PO₂ inside next electromagnet. Time, Dₙ, is the delay in activating the switch (102) associated with each electromagnet. As the cartridge accelerates down the barrel (200), this real-time velocity estimation (Vₙ), processing of the delay (Dₙ) and synchronized switching, is achieved by a Master Control Hardware (206). In one of the embodiments, this is a processor with readable memory embedded with programming instructions (such as, but not limited, to a microcontroller/ microprocessor etc). The circuit hardware can communicate through optically isolated links such as, but not limited to, fibre optics, wireless communication etc.

The first input trigger to the Master Control Hardware can be manual (202). Alternately it can be through a feedback (203) from a target system (302) where such pellets have to be injected. In an embodiment where such a target system is a Fusion Reactor, early signs of a disruptive instability can be picked up by diagnostics employed in the Fusion Reactor and used to generate an input trigger for the Master Control Hardware (206). It then activates the first and subsequent electromagnets (100), leading to injection of pellets and quenching of the plasma before any damage to the reactor.

**Vacuum System (303):** The enclosure (401) that houses the Core System (300)can be pumped down to any measurable vacuum using a pumping system through ports (407) . Though not mandatory for the operation of the device, this may be essential such as, in an embodiment that is coupled to a target system maintained under vacuum, e.g., a fusion reactor. In one example, the pump down to a desired vacuum is carried out using a molecular pump and monitored using a cold cathode gauge. The vessel along with all in-vessel components (such as electromagnets, barrel etc) comprising the core system is bakeable for 24-48 hours. The vessel is flushed with dry Nitrogen each time before venting it to atmosphere, to reduce water vapor contamination and to reduce the pump down time.

**Vacuum Isolator (307) and Electrical Isolator (308):** In one of the embodiments the front port (404) of the enclosure (401) that houses the core system (300) may be connected to a vacuum isolator (307) (such as, a vacuum valve) and an Electrical Isolator (308). This is illustrated in Fig. 10. The vacuum isolator (307) is meant to couple the system, if required, to any target system (302) under vacuum; it allows venting of the pellet injector system without affecting the vacuum of the target system (302). In addition, the enclosure (300) and vacuum isolator (307) may be connected via a removable transition that acts as an electrical isolator (308). It is configured to provide high voltage isolation and isolation of the earthing (electrical ground) of the enclosure from the target system, if required. It may comprise of an electrical insulator (1000) and insulating bushes (1001) as configured in Fig 10.

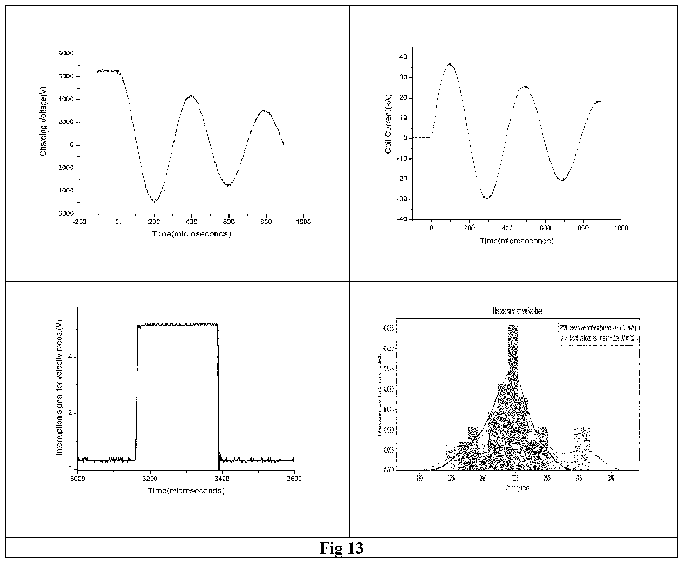

**Operation:** By way of example, best operating scenarios of 2 example embodiments are described below. The 2 systems are configured to accelerate cartridges to velocities (a) 200 m/s (max) and (b) 500 m/s (max). The example target system is a Fusion Reactor. The representative system for achieving 200m/s has 2 modules and that for achieving 500 m/s has 6 modules. The respective parameters are as given in Table3. For achieving 200 m/s of cartridge speed the experimental parameters are shown in Fig13. Cartridge, pre-filled with pellets of LiTiO₃, is pre-loaded in the barrel and placed optimally inside the first electromagnet at an optimal location PO₁. The enclosure housing the core system is vacuum sealed and pumped down to desired vacuum. Electromagnets and their respective Capacitor banks are configured to deliver the required currents and generate magnetic fields. Capacitor banks attached to the driver electromagnets are charged to their respective voltages, V1 and V2. The desired velocity of the cartridge is attained coarsely by deciding on the number of modules to be activated and the charging voltages of individual capacitor banks attached to respective electromagnets. Upon, receiving a command (an input electrical signal over an optical link) from the target system, the Master Control hardware will activate (close) the switch between Capacitor bank-1 and Coil-1. The capacitor discharges through the coil driving a current; the electromagnetic forces accelerate the Cartridge into the next coil. As the cartridge exits Coil-1 and travels the length between the two coils, feedback from a transmitter-receiver (laser-sensor) diagnostic intercepting the path of the cartridge allows the Master Control Hardware to estimate the velocity of travel, from "time-of-flight" measurement. With a known gap between the coils, the time, delay D, required by the Cartridge to move from Pito the optimal position (PO₂) in next coil is estimated real-time. A trigger is thereby provided with a requisite delay D to the switch associated with Capacitorbank-2, causing it to discharge through Coil-2.The same is repeated for subsequent stages if present. The final velocity is reached at the end of the final stage. At the muzzle it is stopped by a metal Stopper. In the present examples, a cartridge with a face thickness of less than a mm is configured with two cross-slits (perpendicular to each other) and four stubs. The rear end, closed with a threaded plug has a hollow central axial tube of ID 5 mm and length 15.5 mm. The tube is pre-filled with pellets. At 200m/s the cartridge upon impact onto a stopper of 9 mm, generates an impact force of approx. 1.5 MN. The force is enough to open the cartridge along the slits present on the front face, in ~55 microseconds to a diameter of 5 mm. Upon impact, the Cartridge opens along initiation slits and the pellets are released through the hole in the stopper. The spent cartridge is removed from the stopper and discarded before the next cartridge is loaded.

**TABLE 3: Parameters of System (2 operating Examples)**

| **Velocity** | **200 m/s** | | | **500 m/s** | | |
|---|---|---|---|---|---|---|
| No of Modules | 2 | | | 6 | | |
| Length of Accelerator | 300 mm | | | 800 mm | | |
| Total time of acceleration | 1.2 ms | | | 2.7 ms | | |

| **Electromagnets** | | | | | | |
|---|---|---|---|---|---|---|
| No of electromagnets | 2 | | | 6 | | |
| Inductance | 7 µH (each) | | | 7µH (each) | | |
| Length | 52 mm (each) | | | 52 mm ((each) | | |
| No. of turns | 22 (each) | | | 22 (each) | | |
| No. of layers | 2 | | | 2 | | |
| Conductor Diameter | 3.2 mm | | | 3.2 mm | | |
| Material | Copper-OHFC | | | Copper-OHFC | | |

| **Capacitor Bank** | | | | | | |
|---|---|---|---|---|---|---|
| | Capacitance | Voltage | Current/Tim e period | Capacitance | Voltage | Current/Time period |
| C1 | 370 µF | 6 kV | 30kA /430 µs | 380 µF | 5.7 kV | 30.18 kA /400 µs |
| C2 | 370 µF | 6 kV | 30kA /426 µs | 380 µF | 6.6 kV | 33.86 kA /403 µs |
| C3 | | | | 380 µF | 7.8 kV | 39.17kA/403 µs |
| C4 | | | | 380 µF | 8.6 kV | 42.64 kA /403 µs |
| C5 | | | | 380 µF | 9.1 kV | 45.5 kA /403 µs |
| C6 | | | | 380 µF | 9.2 kV | 46.15 kA /403 µs |

| **Delay in activating each Electromagnet (with respect to previous Electromagnet)** | | | | | | |
|---|---|---|---|---|---|---|
| D1 | 47 mm | 46.7 mm | | | | |
| D2 | - | 40.7 mm | | | | |
| D3 | - | 36.5 mm | | | | |
| D4 | - | 45 mm | | | | |
| D5 | - | 44.65 mm | | | | |

| **Velocity at the end of each module** | | | | | | |
|---|---|---|---|---|---|---|
| v1 | 140 m/s | 153 m/s | | | | |
| v2 | 210 m/s | 251 m/s | | | | |
| v3 | - | 345 m/s | | | | |
| v4 | - | 424 m/s | | | | |
| v5 | - | 470 m/s | | | | |
| v 6 | - | 510 m/s | | | | |

| **Cartridge Details** | | | | | | |
|---|---|---|---|---|---|---|
| Mass | 17 g | 17 g | | | | |
| Length | 25 mm | 25 mm | | | | |
| Outer Diameter | 23.6 mm | 23.6 | | | | |
| Face thickness | 0.5 mm | 0.9 mm | | | | |

| **Barrel Details** | | | | | | |
|---|---|---|---|---|---|---|
| Material | PEEK | PEEK | | | | |
| Dimensions | L= 300 mm, ID= 23.8 mm, Thick= | L= 800 mm, ID= 23.8 mm, Thick= | | | | |

| **Stopper Details** | | | | | | |
|---|---|---|---|---|---|---|
| Impact Force | 1.5MN | 3MN | | | | |
| Stopper Hole | 21.55 mm | 21.55 mm | | | | |
| Material | SS304 | SS304 | | | | |

### Examples to illustrate how the invention is carried out in actual practice

a) The prototype development of the Pellet injector started with development of an induction accelerator that can accelerate hollow metallic shells of approx. 25 gm to 250m/sec
b) The electromagnets were designed by winding conducting wire over a hollow bobbin that also acted as a barrel. A hollow barrel made of PEEK was machined with an ID comparable with the dimension of the cartridge. The coil conductors were directly wound over the PEEK barrel and reinforced with fibre-epoxy composite. Holes were drilled in the gap between the electromagnets to allow for laser beams to pass, to carry out time-of-flight measurement of the velocity.
c) The electromagnets were tested upto the desired current and voltage,by charging and discharging the capacitors through them.
d) Discharging the Capacitor Bank through the electromagnets at different voltages and optimizing the delay in firing the second stage for each voltage gave the voltage-position-velocity curve for different velocities.
e) The barrel-end was fitted with a 'stopper' threaded onto it.
f) A hollow cartridge was fabricated whose front face would open upon impact. The design was tailored to allow the front face to flare out into four-petals along the fault lines, as it struck the 'stopper'. The choice of material, the thickness of the front face, the fault lines to initiate opening, the design of the 'stopper' were all optimized. The same may be validated through computer calculations.
g) Further modifications of the cartridge design were carried out at its rear end: the rear end of the hollow cartridge was plugged by a threaded disk having an axial hollow tube that can be filled with pellets.
h) Experiments were carried out with pre-filled pellets of Li₂TiO₃ at different cartridge velocities; the ejection of pellets was videographed with a high-speed camera.
i) The videos were analyzed through image processing to find out the mean velocity, the distribution of velocities and the spatial spread of the pellets for different velocities of the cartridge. Threshold impact velocity of cartridge that ensured fracture and complete ejection of pellets were also thereby determined.
j) Experiments were also carried out to determine the impact characteristics of pellets onto different targets like SS and Graphite tiles.
k) The electromagnets, barrel, stopper and all in-vacuum components were tested for vacuum compatibility in a vacuum chamber. The vacuum achieved, following baking of chamber at 100°C, was 10⁻⁷ mbar.
l) The support structure for the solenoids, barrel and stopper were redesigned, fabricated with vacuum compatible materials and electropolished (wherever possible) to be compactly accommodated inside a vacuum vessel. The electrical connections were made out of copper bus-bars and were carried out through the rear flange with the help of high voltage electrical feedthroughs.
m) The vacuum vessel was designed using computer aided drawing software to accommodate all in-vacuum components with all the required ports appropriately for electrical connections, velocity diagnostics and pumping requirements. The same was fabricated, electropolished and tested for welding leaks.
n) The vacuum vessel integrated with all the in-vacuum components underwent required pumping and baking cycles to achieve the desired vacuum. All ports were leak tested.
o) Coils were tested for their in-vacuum performance.
p) A test vessel was attached to the front port of the Pellet Injector Vessel to assess the operation of pellet injector and injection of pellets in-vacuum. Cartridges loaded with Li₂TiO₃pelletswere accelerated by the two-stage injector in-vacuum; pellets were successfully offloaded in the test vessel after cartridge impacted the stopper at the muzzle.
q) Vacuum operation did not lead to any significant difference in the performance of the injector in terms of acceleration of the cartridge, fracture of the cartridge or velocity of the pellets.
r) The Pellet injector was commissioned on ADITYA-U Tokamak for final testing and experiments with a Plasma Discharge.

### Some of the non-limiting advantages of present invention:

a) The inductively driven electromagnetic pellet injector configured to be used in a Fusion Reactor for shutting down burning plasma is an alternate to the gas injection techniques or other pneumatically driven solid pellet injection techniques conventionally used.
   i. Gas injection techniques are inherently limited by complex quench requirements, high energy barriers at the edge of the plasma which further gets aggravated when large volume plasmas have to be accessed.
   ii. Solid pellets propelled by gases can reach limited velocity (300-400 m/sec) due to the slow thermal velocity of the pressurized gas molecules; response time of such systems are also limited by slow response time of mechanical valves
   iii. These methods may be unsuitable when the reactor is to be shut down following disruptions within a short warning time scale of less than 10 ms.
   Electromagnetic acceleration allows deposition of solid pellets into the core of the plasma on fast time scales (few ms).
b) When compared to electromagnetic accelerators proposed elsewhere, the advantage of an Inductively driven Pellet Accelerator and Injector device is that the cartridge is accelerated using one or more electromagnets that drive it using magnetic fields and secondary currents induced on the cartridge in a non-contact (inductive) way. As the cartridge is not in physical (electrical) contact with the driver coil, the inductive method of acceleration helps to avoid any moving high-current electrical contact. Erosion due to arcing, etc are therefore not of concern, as may be the case with other electromagnetic accelerators such as, those that rely on a cartridge carrying primary current and therefore is a moving electrical contact between current carrying conducting rails.
c) The inductive method of acceleration uses solenoidal coils configured as electromagnets. This limits the B field mostly within the coils (except for an insignificant fringing field outside). Further these fields have transient presence and any electromagnetic noise resulting from such fields can be further limited by shielding through a metal housing (which doubles up as a vacuum enclosure) of suitable conducting thickness. The possibility of electromagnetic fields interfering with the magnetic fields of external systems including those of the target systems, (say, that of a Fusion Reactor) therefore is nil or negligible.
d) As the design of the device is modular the number of stages (electromagnets) can be added to increase the maximum limit of the velocity of the pellets. The velocity can be varied within the range, as desired, through a set of simple interactive menu with a set of coarse and fine controls, viz., (i) choosing to operate a few selected electromagnets and (ii) regulating the voltages of various stages can provide a coarse control over the velocities (ii) adjusting the switching synchronization of each module (that is, the firing position of the cartridge inside the electromagnet in each stage) can be used to achieve a fine control of the velocities.
e) The device is purported to accelerate and inject a wide range of pellets onto a substrate or into a system. This invention is therefore suitable for a wide range of applications and overcomes limitations by various microparticle accelerators tabulated (S.No. 5 to 8) in Table 1. Namely,
   a. The size, shapes and material can be varied as desired.
   b. Velocities desired can be set by the user through an interactive control system upto few hundred m/s with an accuracy and reproducibility of few m/s.
f) As the amount of pellet being injected is accurately measurable, it allows close comparison between experiments and theoretical calculation/predictions.
g) The cartridge has been configured such that quantity of pellets can be increased or decreased within a wide range as much as by an order or more.
h) The injector and cartridge are configured to inject pellets that are shatterable by using a breaking plate so as to have a dispersive load of pellets. The pellets can be injected as a collimated jet or dispersed with an aerial spread. The design of the device does not interfere with additional external arrangements that may be used to steer/bounce off the pellets using appropriate target plates.
**i)** The device is electrically isolated (electrical earthing isolation and High voltage isolation), using insulating breaks and feedthroughs so that the system can be safely coupled to target systems (alongside other subsystems).

The device is equipped with a magazine of cartridges that allows loading of certain number of cartridges (pre-loaded with pellets) without breaking the vacuum. Removal of spent cartridge is also carried out without interrupting the vacuum. These features reduce the duty cycle of operation of the device to less than a minute.

## Claims

1. A Pellet Accelerator and Injector device to accelerate a cartridge, loaded with pellets of solid material, comprising a core system (300) and a peripheral system (301);
wherein the core system (300) comprises a vacuum sealed enclosure (401), one or more linearly arranged, current carrying hollow bore Electromagnets (100) that drive the Cartridge, an insulating Barrel (200) through which the cartridge moves, the Cartridge (103) that carries the pellets within itself and offload them through impact-induced separation process at the muzzle of the barrel and a Stopper (402) at the muzzle of the barrel, that stops the cartridge and detaches it from the pellets and all these components are mounted on support structures (403); and
wherein the peripheral system (301) comprises power supplies (101) for the electromagnets (100) to apply electrical voltage and drive current through, switches (102) that connect the Power supplies to the electromagnets, a velocity measurement system (204), and a Master Control hardware (206) that acts on the feedback from velocity measurement system and synchronizes the coil switching; **characterized in that**
the electromagnet, namely a coil (100) carrying a time-varying current (Iₚ), is used to generate magnetic fields inside the coil directing along the axis of the coil (B_{z}) and along the radius (Bᵣ) and on closing the switch (102) in a circuit formed by the coil (100) and the power supply (101), the time varying current (Iₚ) flowing through the electromagnet creates the time varying axial magnetic field (B_{z}) that induces an electric potential on the cartridge (103) placed within it, in a contactless way resulting a secondary current (I_{sec}) to flow circumferentially on skin of the conducting cartridge (103) and the secondary current density (J_{sec}) on the cartridge and the radial magnetic field (Bᵣ) of the electromagnet together generate an electromagnetic force, F_{z}, that accelerates the cartridge loaded with pellets within it.

2. The Pellet Accelerator and Injector device as claimed in claim 1, wherein the core system is maintained under vacuum and all the components of core system are made of vacuum compatible materials that have low outgassing rate and are bakeable to 100 °C in order to remove water vapor.

3. The Pellet Accelerator and Injector device as claimed in claim 1, wherein the peripheral system is connected to a Vacuum System (303) that maintains the core system under vacuum.

4. The Pellet Accelerator and Injector device as claimed in claim 1, wherein the core system, consisting of electromagnets (100), barrel (200), stopper (402) and support structures (403) is placed inside an enclosure (401); the enclosure being vacuum-sealed, made of material that is bakeable, having low outgassing rate, electropolished internally, and adapted to be pumped down to a vacuum using a vacuum pump.

5. The Pellet Accelerator and Injector device as claimed in claim 1, wherein Electromagnets are coils made of a conducting element (500), such as, but not limited to copper, copper-beryllium etc.

6. The Pellet Accelerator and Injector device as claimed in claim 5, wherein the coils are strengthened and reinforced with fiber composites (506) such as, but not limited to, Kevlar/Glass-fibre & epoxy to withstand the magnetic (hoop) forces generated due to such currents.

7. The Pellet Accelerator and Injector device as claimed in claim 1, wherein the barrel (200) is made up of a vacuum compatible polymer material such as, but not limited to Glass Fibre, Delrin, Teflon, PEEK etc and the bore diameter of the barrel is such close to the diameter of the Cartridge (103) to be accelerated that the bore diameter of the barrel and the diameter of the Cartridge (103) to be accelerated has a tolerance of -0.1 mm to allow maximum energy transfer between the magnetic field of the coil and the cartridge.

8. The Pellet Accelerator and Injector device as claimed in claim 1, wherein the cartridge (103) is a cylindrical shell (600) made of either a conducting material (601) such as, but not limited to, Non-tempered Al-6061 or a non-conducting material with a conducting skin.

9. The Pellet Accelerator and Injector device as claimed in claim 8, wherein the cartridge has a front face (603) that is flat, thin, typically < 1 mm, and having two cross-slits (604) perpendicular to each other with four stubs (605) and the rear end being closed with a threaded plug (606); the plug having a hollow central axial tube (607) of few mm diameter and length approx. that of the cartridge; the tube being filled with pellets and wherein the cartridge (103) upon impact onto the stopper (402) bursts open along the cross-slits (604) allowing the pellets to escape.

10. The Pellet Accelerator and Injector device as claimed in claim 1, wherein said stopper (402) is made of high strength material, such as, hardened Steel, Inconol Alloy and the like.

11. The Pellet Accelerator and Injector device as claimed in claim 1, wherein the central hole (700) of the stopper has a diameter less than the outer diameter of the cartridge (103).

12. The Pellet Accelerator and Injector device as claimed in claim 1, wherein the cartridges (103) are loaded without opening the Core system or interrupting the vacuum with the help of a magazine consisting of a tube (1101) that can be separately spring-loaded (1102) with cartridges, vacuum sealed and introduced through a side port (1103 perpendicular to the accelerating barrel (200) and the other end of the tube is aligned with the rear end of the barrel (200).

13. The Pellet Accelerator and Injector device as claimed in claim 1, comprises an assembly for cartridge removal, wherein the assembly comprises a rotary disc (1106) with six stoppers (402) , wherein each stopper is aligned with the muzzle of the barrel (200); thereby the spent cartridge gets lodged into the stopper (402) with each shot followed by rotating the rotary disc before the next shot to align the next stopper with the muzzle, wherein the rotation is enabled by a gear mechanism (1107) and stepper motor (1108) and operated through an electronic control circuit.

14. The Pellet Accelerator and Injector device as claimed in claim 1, wherein the velocity measurement system consists of a transmitter (800) and a receiver (801) placed across the path of the cartridge at discrete locations.

15. The Pellet Accelerator and Injector device as claimed in claim 1, wherein the Master Control Hardware comprises a readable memory and a processor wherein the processor is configured to estimate the real-time velocity (Vₙ) and process the delay (Dₙ) and synchronized switching during the acceleration of the cartridge down the barrel (200).

## Patentansprüche

1. Vorrichtung zum Beschleunigen und Injizieren von Pellets, wobei diese zur Beschleunigung einer Kartusche dient, welche mit Pellets aus einem feststofflichen Material beladen ist, und ein Kernsystem (30) und ein randständiges System (301) umfasst;
wobei das Kernsystem (300) einen vakuumversiegelten Hohlraum (401), einen oder mehrere linear angeordnete, stromführende Elektromagnete (100) mit Hohlbohrung, welche die Kartusche antreiben, einen isolierenden Lauf (200), durch welchen sich die Kartuschen bewegen, die Kartusche (103), in welcher sich die Pellets befinden und von welcher sie mittels eines stoßinduzierten Trennungsvorgangs an der Mündung des Laufes abgegeben werden, und eine Stoppvorrichtung (402) an der Mündung des Laufes umfasst, welche die Kartusche stoppt und sie von den Pellets löst, wobei sämtliche dieser Bauteile auf Trägerstrukturen (403) angebracht sind; und
wobei das randständige System (301) Stromversorgungseinrichtungen (101) für die Elektromagnete (100), um über Schalter (102), welche die Stromversorgungseinrichtungen mit den Elektromagneten verbinden, eine elektrische Spannung und einen Antriebsstrom anzulegen, ein Geschwindigkeitsmesssystem (204) und eine übergeordnete Steuerungshardware (206) umfasst, welches infolge der Rückmeldung vom Geschwindigkeitsmesssystem tätig wird und die Spulenumschaltung synchronisiert; **dadurch gekennzeichnet, dass**
der Elektromagnet, insbesondere eine Spule (100), die von einem im Zeitverlauf variierenden Strom (Iₚ) durchflossen wird, dazu verwendet wird, innerhalb der Spule magnetische Felder zu erzeugen, die entlang der Achse der Spule (B_{z}) und entlang dem Radius (Bᵣ) ausgerichtet sind, und zwar beim Schließen des Schalters (102) in einem Stromkreis, welcher von der Spule (100) und der Stromversorgungseinrichtung (101) gebildet wird, wobei der im Zeitverlauf variierende Strom (Iₚ), welcher durch den Elektromagneten fließt, ein im Zeitverlauf variierendes axiales Magnetfeld (B_{z}) erzeugt, das an der darin angeordneten Kartusche (103) auf kontaktlose Weise ein elektrisches Potenzial erzeugt, welches bewirkt, dass ein Sekundärstrom (I_{sec}) umlaufend auf der Außenhülle der leitfähigen Kartusche (103) fließt, und die Sekundärstromdichte (J_{sec}) auf der Kartusche und das radiale Magnetfeld (Bᵣ) des Elektromagneten gemeinsam eine elektromagnetische Kraft, F_{z}, erzeugen, welche die Kartusche mit den darin befindlichen Pellets beschleunigt.

2. Vorrichtung zum Beschleunigen und Injizieren von Pellets wie in Anspruch 1 beansprucht, wobei das Kernsystem unter Vakuum gehalten wird und sämtliche Bauteile des Kernsystems aus vakuumverträglichen Materialien hergestellt sind, die eine geringe Ausgasungsrate haben und bis auf 100 °C erhitzt werden können, um Wasserdampf zu entfernen.

3. Vorrichtung zum Beschleunigen und Injizieren von Pellets wie in Anspruch 1 beansprucht, wobei das randständige System mit einem Vakuumsystem (303) verbunden ist, welches das Kernsystem unter Vakuum hält.

4. Vorrichtung zum Beschleunigen und Injizieren von Pellets wie in Anspruch 1 beansprucht, wobei das Kernsystem, welches aus Elektromagneten (100), Lauf (200), Stoppvorrichtung (402) und Trägerstrukturen (403) besteht, in einem Hohlraum (401) angeordnet ist, wobei der Hohlraum vakuumversiegelt ist, aus einem erhitzungsfähigen Material hergestellt ist, eine niedrige Ausgasungsrate hat, innenseitig elektropoliert ist und sich dafür eignet, unter Verwendung einer Vakuumpumpe luftleer gepumpt zu werden.

5. Vorrichtung zum Beschleunigen und Injizieren von Pellets wie in Anspruch 1 beansprucht, wobei es sich bei den Elektromagneten um Spulen aus einem leitfähigen Element (500) wie etwa, unter anderem, Kupfer, Kupfer-Beryllium usw., handelt.

6. Vorrichtung zum Beschleunigen und Injizieren von Pellets wie in Anspruch 5 beansprucht, wobei die Spulen mit faserbasierten Verbundstoffen (506) wie etwa, unter anderem, Kevlar/Glasfasern & Epoxid gefestigt und verstärkt sind, um den magnetischen (umfangsseitig wirkenden) Kräften zu widerstehen, welche aufgrund derartiger Ströme entstehen.

7. Vorrichtung zum Beschleunigen und Injizieren von Pellets wie in Anspruch 1 beansprucht, wobei der Lauf (200) aus einem vakuumverträglichen Polymermaterial wie etwa, unter anderem, Glasfasern, Delrin, Teflon, PEEK usw. hergestellt ist, und der Bohrungsdurchmesser des Laufes dem Durchmesser der zu beschleunigenden Kartusche (103) derart nahekommt, dass der Bohrungsdurchmesser des Laufes und der Durchmesser der zu beschleunigenden Kartusche (103) eine Toleranz von -0,1 mm haben, um eine größtmögliche Energieübertragung zwischen dem magnetischen Feld der Spule und der Kartusche zu ermöglichen.

8. Vorrichtung zum Beschleunigen und Injizieren von Pellets wie in Anspruch 1 beansprucht, wobei es sich bei der Kartusche (103) um ein zylindrisches Gehäuse (600) handelt, das entweder aus einem leitfähigen Material (601) wie etwa, unter anderem, nicht-angelassenem A1-6061 oder einem nicht-leitfähigen Material mit einer leitfähigen Außenhülle hergestellt ist.

9. Vorrichtung zum Beschleunigen und Injizieren von Pellets wie in Anspruch 8 beansprucht, wobei die Kartusche eine Stirnseite (603) hat, die flach und dünn (typischerweise < 1 mm) ist, wobei sie zwei kreuzweise Schlitze (604) aufweist, die rechtwinklig zueinander sind und vier Endabschnitte (605) haben, und das rückwärtige Ende mit einem Gewindestopfen (606) verschlossen ist, wobei der Stopfen ein hohles, mittiges axiales Rohr (607) aufweist, dessen Durchmesser einige mm beträgt und dessen Länge ungefähr derjenigen der Kartusche entspricht; wobei das Rohr mit Pellets gefüllt ist und wobei die Kartusche, wenn sie gegen die Stoppvorrichtung (402) stößt, entlang der kreuzweisen Schlitze (604) aufbricht, sodass die Pellets freigesetzt werden können.

10. Vorrichtung zum Beschleunigen und Injizieren von Pellets wie in Anspruch 1 beansprucht, wobei die Stoppvorrichtung (402) aus einem hochfesten Material wie etwa gehärtetem Stahl, Inconol-Legierung und ähnlichen hergestellt ist.

11. Vorrichtung zum Beschleunigen und Injizieren von Pellets wie in Anspruch 1 beansprucht, wobei das mittige Loch (700) der Stoppvorrichtung einen Durchmesser hat, der geringer als der Außendurchmesser der Kartusche (103) ist.

12. Vorrichtung zum Beschleunigen und Injizieren von Pellets wie in Anspruch 1 beansprucht, wobei die Kartuschen (103) beladen werden, ohne dass das Kernsystem geöffnet wird oder das Vakuum aufgehoben wird, mit Hilfe eines Magazins, das aus einem Rohr (1101) besteht, welches gesondert und federgetrieben (1102) mit Kartuschen beladen werden kann, wobei es vakuumversiegelt ist und durch eine Seitenöffnung (1103) eingeführt wird, die rechtwinklig zum Beschleunigungslauf (200) ist, wobei das andere Ende des Rohrs auf das rückwärtige Ende des Laufes (200) ausgerichtet ist.

13. Vorrichtung zum Beschleunigen und Injizieren von Pellets wie in Anspruch 1 beansprucht, wobei sie eine Baugruppe zum Entfernen von Kartuschen umfasst, wobei die Baugruppe eine Drehscheibe (1106) mit sechs Stoppvorrichtungen (402), wobei jede der Stoppvorrichtungen auf die Mündung des Laufes (200) ausgerichtet ist, wobei auf diese Weise bei jedem Schuss die leere Kartusche in die Stoppvorrichtung (402) gelangt, woraufhin sich vor dem nächsten Schuss die Drehscheibe derart dreht, dass die nächste Stoppvorrichtung auf die Mündung ausgerichtet wird, wobei die Drehbewegung durch einen Getriebemechanismus (1107) und einen schrittweise arbeitenden Motor (1108) ermöglicht wird und von einem elektronischen Steuerschaltkreis betrieben wird.

14. Vorrichtung zum Beschleunigen und Injizieren von Pellets wie in Anspruch 1 beansprucht, wobei das Geschwindigkeitsmesssystem aus einem Übermittler (800) und einem Empfänger (801) besteht, die entlang der Strecke der Kartusche an voneinander getrennten Stellen angeordnet sind.

15. Vorrichtung zum Beschleunigen und Injizieren von Pellets wie in Anspruch 1 beansprucht, wobei die übergeordnete Steuerungshardware einen lesbaren Speicher und einen Prozessor umfasst, wobei der Prozessor dafür ausgelegt ist, die Echtzeit-Geschwindigkeit (Vₙ) abzuschätzen und die Verzögerung (Dₙ) zu verarbeiten und die Schaltvorgänge zu synchronisieren, während die Kartusche entlang des Laufes (200) beschleunigt wird.

## Revendications

1. Dispositif accélérateur et injecteur de pellets pour accélérer une cartouche, chargée de pellets de matériau solide, comprenant un système central (300) et un système périphérique (301) ;
dans lequel le système central (300) comprend une enceinte scellée sous vide (401), un ou plusieurs électroaimants (100) à alésage creux transportant du courant, disposés linéairement qui entraînent la cartouche, un fût isolant (200) à travers lequel la cartouche se déplace, la cartouche (103) qui transporte les pellets à l'intérieur d'elle-même et les décharge par un processus de séparation induit par impact ai niveau la bouche du fût et un élément d'arrêt (402) au niveau la bouche du fût, qui arrête la cartouche et la détache des pellets et tous ces composants sont montés sur des structures de support (403) ; et
dans lequel le système périphérique (301) comprend des alimentations (101) pour les électroaimants (100) afin d'appliquer une tension électrique et un courant d'entraînement, des commutateurs (102) qui connectent les alimentations aux électroaimants, un système de mesure de vitesse (204), et un matériel de commande principal (206) qui agit sur la rétroaction provenant du système de mesure de vitesse et synchronise la commutation de bobine ; **caractérisé en ce que**
l'électroaimant, c'est-à-dire une bobine (100) transportant un courant variant dans le temps (Iₚ), est utilisé pour générer des champs magnétiques à l'intérieur de la bobine se dirigeant le long de l'axe de la bobine (B_{z}) et le long du rayon (Bᵣ) et, lors de la fermeture du commutateur (102) dans un circuit formé par la bobine (100) et l'alimentation (101), le courant variant dans le temps (Iₚ) circulant à travers l'électroaimant crée le champ magnétique axial variant dans le temps (B_{z}) qui induit un potentiel électrique sur la cartouche (103) placée à l'intérieur de celui-ci, d'une manière sans contact, ce qui entraîne un courant secondaire (I_{sec}) qui circule circonférentiellement sur la peau de la cartouche conductrice (103) et la densité de courant secondaire (J_{sec}) sur la cartouche et le champ magnétique radial (Bᵣ) de l'électroaimant génèrent ensemble une force électromagnétique, F_{z}, qui accélère la cartouche chargée de pellets à l'intérieur.

2. Dispositif accélérateur et injecteur de pellets selon la revendication 1, dans lequel le système central est maintenu sous vide et tous les composants du système central sont constitués de matériaux compatibles avec le vide qui ont un faible taux de dégazage et sont aptes à la cuisson à 100 °C afin d'éliminer de la vapeur d'eau.

3. Dispositif accélérateur et injecteur de pellets selon la revendication 1, dans lequel le système périphérique est connecté à un système de mise sous vide (303) qui maintient le système central sous vide.

4. Dispositif accélérateur et injecteur de pellets selon la revendication 1, dans lequel le système central, constitué d'électroaimants (100), d'un fût (200), d'un élément d'arrêt (402) et de structures de support (403), est placé à l'intérieur d'une enceinte (401) ; l'enceinte étant scellée sous vide, constituée d'un matériau apte à la cuisson, ayant un faible taux de dégazage, électropolie à l'intérieur et adaptée pour être pompée jusqu'au vide à l'aide d'une pompe à vide.

5. Dispositif accélérateur et injecteur de pellets selon la revendication 1, dans lequel des électroaimants sont des bobines constituées d'un élément conducteur (500), tel que, mais sans s'y limiter, du cuivre, cuivre-béryllium, etc.

6. Dispositif accélérateur et injecteur de pellets selon la revendication 5, dans lequel les bobines sont consolidées et renforcées avec des composites de fibres (506) tels que, mais sans s'y limiter, du Kevlar/fibre de verre et époxy pour résister aux forces magnétiques (cerceaux) générées en raison de tels courants.

7. Dispositif accélérateur et injecteur de pellets selon la revendication 1, dans lequel le fût (200) est constitué d'un matériau polymère compatible avec le vide tel que, mais sans s'y limiter, de la fibre de verre, Delrin, Téflon, PEEK, etc., et le diamètre d'alésage du fût est si proche du diamètre de la cartouche (103) à accélérer que le diamètre d'alésage du fût et le diamètre de la cartouche (103) à accélérer ont un tolérance de -0,1 mm pour permettre un transfert d'énergie maximal entre le champ magnétique de la bobine et la cartouche.

8. Dispositif accélérateur et injecteur de pellets selon la revendication 1, dans lequel la cartouche (103) est une coque cylindrique (600) constituée d'un matériau conducteur (601) tel que, mais sans s'y limiter, de l'Al-6061 non trempé ou d'un matériau non conducteur avec une peau conductrice.

9. Dispositif accélérateur et injecteur de pellets selon la revendication 8, dans lequel la cartouche a une face avant (603) qui est plate, mince, typiquement < 1 mm, et ayant deux fentes transversales (604) perpendiculaires l'une à l'autre avec quatre embases (605) et l'extrémité arrière étant fermée par un bouchon fileté (606) ; le bouchon ayant un tube axial central creux (607) de quelques mm de diamètre et d'une longueur approximative égale à celle de la cartouche ; le tube étant rempli de pellets et dans lequel la cartouche (103) lors de l'impact sur l'élément d'arrêt (402) s'ouvre en éclatant le long des fentes transversales (604), permettant aux pellets de s'échapper.

10. Dispositif accélérateur et injecteur de pellets selon la revendication 1, dans lequel ledit élément d'arrêt (402) est constitué d'un matériau à haute résistance, tel que de l'acier durci, alliage Inconel et analogues.

11. Dispositif accélérateur et injecteur de pellets selon la revendication 1, dans lequel l'alésage central (700) de l'élément d'arrêt a un diamètre inférieur au diamètre extérieur de la cartouche (103).

12. Dispositif accélérateur et injecteur de pellets selon la revendication 1, dans lequel les cartouches (103) sont chargées sans ouvrir le système central ni interrompre le vide à l'aide d'un magasin constitué d'un tube (1101) qui peut être chargé séparément par ressort (1102) avec des cartouches, scellé sous vide et introduit à travers un orifice latéral (1103) perpendiculaire au fût d'accélération (200) et l'autre extrémité du tube est alignée avec l'extrémité arrière du fût (200).

13. Dispositif accélérateur et injecteur de pellets selon la revendication 1, comprenant un ensemble pour le retrait de cartouche, dans lequel l'ensemble comprend un disque rotatif (1106) avec six éléments d'arrêt (402), dans lequel chaque élément d'arrêt est aligné avec la bouche du fût (200) ; ainsi, la cartouche usagée se loge dans l'élément d'arrêt (402), chaque tir étant suivi d'une rotation du disque rotatif avant le tir suivant pour aligner l'élément d'arrêt suivant avec la bouche, dans lequel la rotation est activée par un mécanisme d'engrenage (1107) et un moteur pas à pas (1108) et actionnée par un circuit de commande électronique.

14. Dispositif accélérateur et injecteur de pellets selon la revendication 1, dans lequel le système de mesure de vitesse est constitué d'un émetteur (800) et d'un récepteur (801) placés à travers la trajectoire de la cartouche à des emplacements discrets.

15. Dispositif accélérateur et injecteur de pellets selon la revendication 1, dans lequel le matériel de commande principal comprend une mémoire lisible et un processeur dans lequel le processeur est configuré pour estimer la vitesse en temps réel (Vₙ) et traiter le retard (Dₙ) et une commutation synchronisée pendant l'accélération de la cartouche dans le fût (200).
